# FASCICULE DE BREVET EUROPEEN

(11) **EP 1 181 108 B1**
(45) Date de publication et mention de la délivrance du brevet: **30.07.2003**
(21) Numéro de dépôt: 00914003.9
(22) Date de dépôt: 10.04.2000
(51) Int. Cl.: B05D 7/26, C08K 5/54, C09D 127/06, G01N 27/333, G01N 27/414

(54) **PROCEDE DE DEPOT D'UNE COUCHE ADHERENTE DE PVC SUR UNE ELECTRODE ET ELECTRODE OBTENUE SELON CE PROCEDE**
VERFAHREN ZUM ABLAGERN EINES HAFTENDEN PVC-ÜBERZUGS AUF EINER ELEKTRODE UND BEI DIESEM VERFAHREN ERHALTENE ELEKTRODE
METHOD FOR DEPOSITING AN ADHESIVE PVC LAYER ON AN ELECTRODE AND ELECTRODE OBTAINED ACCORDING TO SAID METHOD

(30) Priorité: 16.04.1999 FR 9904926
(43) Date de publication de la demande: 27.02.2002
(73) Titulaire: UNIVERSITE DE NEUCHATEL, CH-2000 Neuchatel (CH)
(72) Inventeur: VAN DER WAL, Peter, Douwe, CH-2000 Neuchâtel (CH)
(74) Mandataire: Gresset, Jean
(86) Numéro de dépôt international: CH0000205
(87) Numéro de publication internationale: WO00062944

(56) Documents cités:
- EP-A- 0 045 396
- DE-A- 1 494 534
- DE-A- 2 432 006
- FR-A- 2 438 076
- GB-A- 1 113 635
- FIAZ M ET AL: "SILANE CROSSLINKING OF PLASTICIZED POLY(VINYL CHLORIDE)" ADVANCES IN POLYMER TECHNOLOGY,GB,JOHN WILEY AND SONS, CHICHESTER, vol. 17, no. 1, page 37-51 XP000732737 ISSN: 0730-6679
- PATENT ABSTRACTS OF JAPAN vol. 010, no. 298 (P-505), 9 octobre 1986 (1986-10-09) & JP 61 114156 A (NOK CORP), 31 mai 1986 (1986-05-31)

## Description

La présente invention concerne un procédé de dépôt d'une couche adhérente d'un copolymère de polychlorure de vinyle (PVC), notamment sur un matériau hydrophile et, plus particulièrement encore, sur un matériau susceptible de réagir avec un alkoxysilane. L'invention conceme également une électrode pour la mesure sélective d'ions, incorporant une couche adhérente réalisée selon ce procédé.

La présente invention se rapporte plus particulièrement à un procédé de dépôt d'une couche adhérente d'un copolymère de PVC sur une électrode, pour la mesure sélective d'ions, du type comportant un substrat, un organe destiné à mesurer l'activité d'un ion dans une solution et une membrane recouvrant ledit organe et formée d'un matériau à base de PVC comportant un agent ionophore choisi en fonction de l'ion à mesurer,

Le PVC est un polymère trouvant de nombreuses applications. Malheureusement, sa fixation sur certains supports pose problème. C'est le cas, notamment, des supports en céramique, en silicium ou en matière plastique, qui sont hydrophiles, alors que le PVC est hydrophobe.

Le brevet US 5,637,642 propose une solution à ce problème en utilisant un copolymère comprenant du PVC et de l'alkyle trialkoxysilane substitué, préparé par substitution nucléophilique à la température ambiante. Le copolymère est mis en solution dans un solvant aprotique, disposé sur le substrat puis séché, toujours à la température ambiante. Un tel copolymère est, certes, intéressant mais le procédé de synthèse proposé dans ce brevet est particulièrement laborieux et exige des conditions de fabrication très strictes, nécessitant l'utilisation de gaz inerte, l'exclusion d'eau et le travail dans l'obscurité.

La présente invention a pour but essentiel de proposer un procédé simple et efficace, permettant de fixer à moindre coût une couche adhérente de PVC sur un substrat présentant une surface hydrophile.

Le procédé selon l'invention est caractérisé en ce qu'il comprend les étapes de:
• formation, dans un solvant organique, d'un mélange de précurseurs du copolymère comportant du PVC et 0.1 à 2 % en poids d'un organotrialkoxysilane répondant à la formule:

   H(HN - R₁)ₓHN - R₂ - Si - (OR₃)₃,

   dans laquelle R₁ est un groupe alkyle ou aromatique intercalaire, R₂ est aussi un groupe alkyle ou aromatique intercalaire, R₃ est un groupe alkyle, les trois substituants R₃ pouvant ne pas être les mêmes, et x est compris entre 0 et 2,
• dépôt d'une couche de ce mélange sur le substrat,
• séchage du mélange afin de faire évaporer le solvant, et
• chauffage de l'ensemble ainsi obtenu à une température comprise entre 70 et 170 °C, durant un temps compris respectivement entre 3 heures et 5 minutes.

De manière surprenante, et malgré les faibles épaisseurs mises en jeu, il a été constaté qu'en effectuant la polymérisation du copolymère directement sur le substrat et à une température relativement élevée, on obtient à moindre coût une couche qui adhère parfaitement.

On connaît certes déjà des procédés de dépôt d'une couche de PVC sur un support. De tels procédés sont, par exemple, décrits dans les documents DE 14 94 534, GB 1 113 635, EP 0 045 396 et FR 2 438 076. Dans ces documents, un procédé similaire est utilisé pour appliquer une couche de PVC sur un support en métal, généralement en acier. Les couches mises en jeu sont épaisses, de manière à protéger la surface de métal.

Il est avantageux de choisir l'organotrialkoxysilane parmi le 3-amino propyle triéthoxysilane, le 3(2-aminoéthyle amino) propyle triméthoxysilane, le triméthoxysilyle propyle diéthylène triamine ou leur mélange. En variante, l'organotrialkoxysilane peut être formé d'un mélange de 3(2-aminoéthyle amino) propyle triméthoxysilane et de phényle triéthoxysilane.

Les essais effectués ont montré qu'il était particulièrement intéressant que la température soit voisine de 120°C et soit appliquée durant deux heures environ.

La qualité de la couche de PVC dépend, notamment, de sa souplesse. Cette caractéristique est obtenue grâce au fait que le mélange de précurseurs du copolymère comporte, en outre, un plastifiant, dans une proportion en poids pouvant aller jusqu'à deux parts de plastifiant pour une part de PVC. Cette proportion est, avantageusement, d'une part de PVC pour une à deux parts de plastifiant.

Le plastifiant peut être choisi parmi le dibutyle phtalate, le bis(2-éthyle hexyle) phtalate, le dibutyle sébacate, le bis(2-éthyle hexyle) sébacate, le tris(2-éthyle hexyle) trimellitate, tris(2-éthyle hexyle) phosphate, le dioctyle phényle phosphonate, le 2-nitrophényle octyle éther, le bis(1-butyle pentyle) décane-1, le 10-diyle diglutarate, le tétraundécyle benzophénone-3,3',4,4'-tétracarboxylate et leurs dérivés.

Le choix du solvant dépend du type de PVC utilisé. Avec un PVC à haut poids moléculaire, le solvant sera choisi, de préférence, parmi le méthyle cyclohexanone, le diméthyle formamide, le nitrobenzène, l'isophorone, le mésityle oxyde, le tétrahydrofurane et le cyclohexanone. Lorsqu'on utilise un PVC à plus faible poids moléculaire, le solvant est avantageusement choisi parmi le dipropyle cétone, le méthyle amyle cétone, le méthyle isobutyle cétone, l'acétonyle acétone, le méthyle éthyle cétone, le dioxane, le chlorure de méthylène et leurs dérivés.

Il est important que le mélange ait une consistance adéquate pour pouvoir être déposé sur le substrat. De bons résultats ont été obtenus avec une part de précurseurs du copolymère pour une à trente parts de solvant. De manière avantageuse, le mélange comporte une part de précurseurs du copolymère pour dix à vingt parts de solvant.

Le PVC est notamment utilisé comme membrane sélective d'ions destinée à équiper des électrodes de type ISE (de l'anglais "ion sélective électrode"). De telles électrodes permettent, par exemple, de mesurer l'activité des ions ammonium, calcium, chlorure, fluoroborate, nitrate, nitrite, perchlorate et potassium, ainsi que de mesurer la dureté de l'eau.

La membrane est généralement formée d'un mélange de PVC à haut poids moléculaire et d'un plastifiant, dans un rapport d'environ 1 à 2, additionné d'un agent ionophore. Ce dernier, qui assure une conduction sélective des ions, est formé soit d'un échangeur d'ion, soit d'un transporteur neutre, dans une proportion ne dépassant pas 1% pondéral. Le mélange peut, en outre, être complété par une adjonction de sels lipophiliques, choisis en fonction de l'électrode, de l'électrolyte et de l'application.

L'utilisation du PVC pour la fabrication de telles membranes s'est révélée particulièrement efficace avec des électrodes de grandes dimensions, offrant des conditions de mesure optimales.

L'utilisation d'une technologie dite planaire permet de réduire considérablement les dimensions de l'électrode qui comporte un substrat en polymère, en céramique ou en silicium monocristallin dopé, supportant un organe de mesure réalisé par dépôt de couches minces ou de couches épaisses. Cet organe de mesure peut être formé soit d'une couche de métal soit d'un transistor à effet de champ sensible aux ions et connu sous l'abréviation ISFET (ion sensitive field effect transistor). L'électrode est avantageusement encapsulée dans de l'époxy, à l'exception de l'organe de mesure qui est recouvert par une membrane sélective d'ions.

Cette diminution de dimensions permet de réduire considérablement le volume de solution à analyser. Toutefois, la fixation d'une membrane et, tout particulièrement, d'une membrane en PVC pose problème.

La présente invention a également pour but de réaliser une électrode sélective d'ions munie d'une membrane en PVC.

Dans un premier mode d'exécution, une telle électrode comporte un substrat, un organe destiné à mesurer l'activité d'un ion dans une solution et une membrane couvrant l'organe de mesure et formée d'un matériau à base de PVC comportant un agent ionophore choisi en fonction de l'ion à mesurer. Selon l'invention, cette électrode comporte, en outre, une couche d'un copolymère de PVC et d'organotrialkoxysilane réalisée selon le procédé défini plus haut, interposée entre le substrat et la membrane, pour assurer l'adhérence de cette dernière.

Des essais ont montré que la membrane pouvait être directement fixée sur l'organe de mesure. Dans un deuxième mode d'exécution, l'électrode comporte un substrat, un organe destiné à mesurer l'activité d'un ion dans une solution et une membrane couvrant l'organe de mesure et formée d'un matériau à base de PVC comportant un agent ionophore choisi en fonction de l'ion à mesurer. Selon l'invention, ce matériau est un copolymère de PVC et d'organotrialkoxysilane réalisé selon le procédé précédemment exposé.

L'organe de mesure peut aussi bien être formé d'un ISFET que d'une couche métallique.

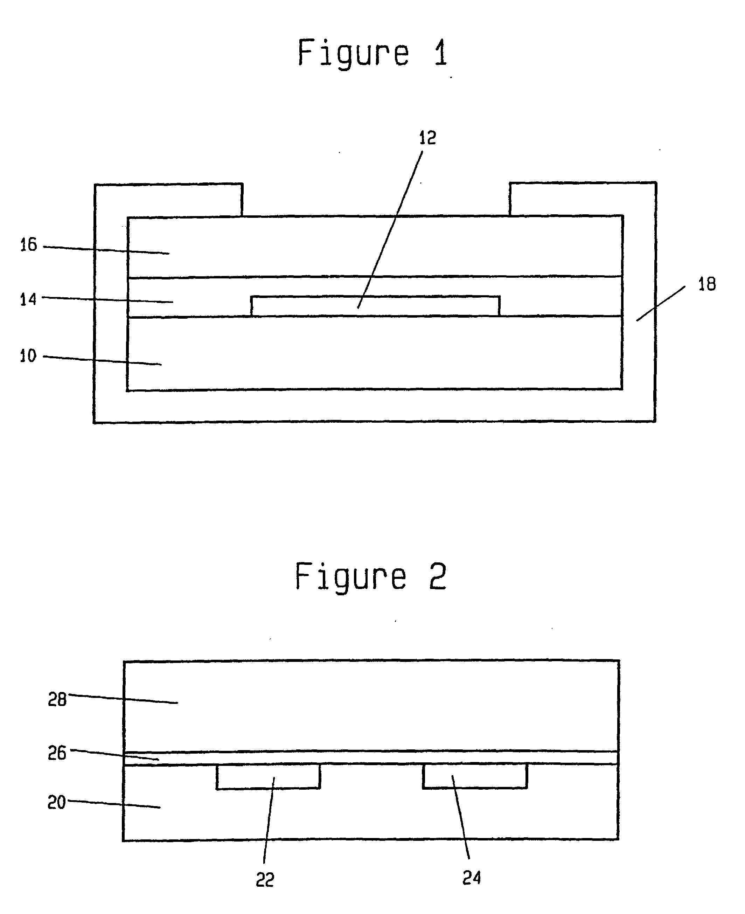

D'autres caractéristiques et avantages de l'invention ressortiront de la description qui va suivre, faite en regard du dessin annexé, dans lequel les figures 1 et 2 représentent des vues en coupe d'électrodes comportant, comme organe de mesure, respectivement une couche métallique et un ISFET.

La figure 1 représente une électrode comportant un substrat 10, avantageusement en alumine, qui porte un organe de mesure 12 formé, de manière classique, d'une couche d'argent et de chlorure d'argent. Le tout est recouvert d'une couche d'adhésif 14, elle-même revêtue d'une membrane 16 dont les caractéristiques seront précisées plus loin. Une encapsulation 18, en époxy, protège l'électrode, ne laissant qu'une fenêtre en regard de l'organe de mesure 12.

Le substrat 10 pourrait également être réalisé en un autre matériau que l'alumine, par exemple en verre, en silicium ou en une matière plastique avantageusement constituée d'un polymère ayant une réaction avec les groupes aminés et, notamment, les polyimides et les résines époxy.

La figure 2 montre un autre type d'électrode dans laquelle l'organe de mesure est formé d'un ISFET comportant, de manière connue, un substrat de silicium monocristallin 20, une source 22, un drain 24 et une grille 26. Cette dernière est revêtue d'une membrane 28, auto-adhésive, comme on le verra plus loin. L'ISFET peut être monté sur un circuit imprimé et enrobé d'époxy, à l'exception de la surface de mesure. La surface de la grille 26 qui constitue la partie sensible de l'organe de mesure, est généralement formée d'un oxyde ou d'un nitride, par exemple un dioxyde de silicium, un oxyde d'aluminium ou de tantale, ou encore un nitride de silicium.

On relèvera que l'utilisation d'une couche adhésive intermédiaire 14 (figure 1) ou d'une membrane auto-adhésive 28 (figure 2) peut se faire indifféremment avec un ISFET ou avec une électrode métallique comportant éventuellement des structures interdigitales telles qu'employées pour des mesures de conductométrie.

La réalisation des organes de mesure, tant de type à électrodes métalliques, en couche mince ou en couche épaisse, qu'à ISFET. est parfaitement connue de l'homme de l'art et ne sera, en conséquence, pas décrite de manière plus détaillée.

Les électrodes représentées au dessin sont destinées à déterminer l'activité d'un ion dans une solution, par la mesure de la différence de potentiel entre l'électrode et une électrode de référence, lorsque celles-ci sont plongées dans la solution.

Comme cela a été expliqué plus haut, les matériaux formant les membranes 16 ou 28 jouent un rôle essentiel dans la qualité de la mesure, les meilleurs résultats ayant été obtenus avec le PVC.

L'important problème que pose l'usage de ce matériau réside dans la manière de fixer les membranes 16 ou 28.

Conformément à l'invention, dans le cas d'une électrode selon la figure 1, la membrane 16 est fixée sur le substrat 10 par l'intermédiaire de la couche 14 qui est un mélange formé d'un copolymère de PVC et d'un organotrialkoxysilane additionné ou non d'un plastifiant.

Plus précisément, pour former la couche adhérente 14, on commence par réaliser, dans un solvant organique, un mélange de précurseurs du copolymère comportant du PVC et un organotrialkoxysilane. Une couche de ce mélange est déposée sur le substrat 10 qui est ensuite placé durant quelques heures en un lieu dont l'atmosphère est normalement humide, à la température ambiante. Le solvant s'évapore et l'humidité atmosphérique provoque une hydrolyse, au moins partielle, des groupes alkoxysilane, de telle sorte que le silane s'accroche à la surface du substrat. Le tout est ensuite placé dans une enceinte thermique, à une température comprise entre 70 et 170°C, durant un temps d'autant plus grand que la température est basse. Dans ces conditions, le PVC réagit avec l'organotrialkoxysilane pour former un copolymère. Comme cela sera précisé plus loin, les meilleurs résultats ont été obtenus avec un traitement de deux heures à 120°C.

L'organotrialkoxysilane doit pouvoir à la fois réagir avec le substrat et avec le copolymère de manière à assurer la liaison de l'un sur l'autre. Ces deux conditions sont satisfaites lorsqu'on utilise un organotrialkoxysilane répondant à la formule

H(HN - R₁)ₓHN - R₂ - Si - (OR₃)₃,

dans laquelle R₁ est un groupe alkyle ou aromatique intercalaire, par exemple un groupe éthyle, et R₂ est aussi un groupe alkyle ou aromatique intercalaire. par exemple un propyle, phényle, phénoxypropyle ou méthyle phényle. Les trois substituants R₃, qui peuvent être ou non différents les uns des autres, sont formés par n'importe quel groupe alkyle, par exemple les groupes méthyle, éthyle et propyle. Enfin, x est compris entre 0 et 2. On relèvera que la quantité d'organotrialkoxysilane correspond à une part comprise entre 0.1 et 2% du poids total du copolymère, avantageusement entre 0.5 et 1%.

On peut trouver une liste de plastifiants utilisables pour la fabrication de membranes PVC sélectives d'ions dans "Fluka selectophore catalogue" de la maison Fluka Chemie AG, Buchs, Suisse. Parmi ceux-ci, on utilisera, de préférence, le dibutyle phtalate, le bis(2-éthyle hexyle) phtalate; le dibutyle sébacate, le bis(2-éthyle hexyle) sébacate, le tris(2-éthyle hexyle) trimellitate, le tris(2-éthyle hexyle) phosphate, le dioctyle phényle phosphonate, le 2-nitrophényle octyle éther, le bis(1-butyle pentyle) décane-1, le 10-diyle diglutarate, le tétraundécyle benzophénone-3,3',4,4'-tétracarboxylate et leurs dérivés.

De manière typique, la proportion de plastifiant dans le copolymère est de 65%. Elle peut être considérablement plus faible, et même être nulle. Dans ce cas, la couche obtenue est très rigide.

Les solvants utilisés pour dissoudre le PVC et les plastifiants sont ceux généralement utilisés avec du PVC à haut poids moléculaire. Ils comprennent le méthyle cyclohexanone, le diméthyle formamide, le nitrobenzène, l'isophorone, le mésityle oxyde, le tétrahydrofurane et le cyclohexanone.

Lorsque la couche d'accrochage est réalisée au moyen de PVC à plus faible poids moléculaire, on utilisera de préférence un solvant choisi parmi le dipropyle cétone, le méthyle amyle cétone, le méthyle isobutyle cétone, l'acétonyle acétone, le méthyle éthyle cétone, le dioxane, le chlorure de méthylène et leurs mélanges.

Le choix du solvant se fera essentiellement de manière que, lors de son évaporation, il ne se forme pas de condensation d'eau à sa surface. La quantité de solvant définit la viscosité du mélange, dont la valeur optimale dépend du mode de dépôt.

Pour réaliser la membrane sélective d'ions 16, on utilise un polymère en solution avantageusement formé d'environ 1/3 de PVC et 2/3 de plastifiant, complété par un agent ionophore, choisi en fonction des ions à sélectionner. La quantité exacte de l'agent ionophore dépend du choix des matériaux et de l'application. Elle représente généralement 1% environ du poids du matériau formant la membrane, c'est-à-dire sans prendre en compte le solvant. Le catalogue de la maison Fluka mentionné plus haut donne toutes les indications utiles relatives au choix de l'agent et à la quantité nécessaire. Le solvant est choisi parmi ceux mentionnés ci-dessus. Ce mélange est finalement étendu sur la couche d'adhésion 14.

Conformément à l'invention, dans le cas d'une électrode selon la figure 2, la membrane sélective d'ions 28 est réalisée, directement sur la grille 26 de l'ISFET, de la même manière que la couche 14 de la figure 1, avec la seule différence que l'agent ionophore, alors incorporé dans la membrane 16, est cette fois incorporé au mélange durant son élaboration. Il a été constaté, de manière surprenante, qu'une telle membrane ne présente pas de défaut majeur. On relèvera particulièrement que les agents ionophores supportent sans problème des traitements thermiques allant jusqu'à 170°C sans que leurs caractéristiques soient modifiées. En outre, aucune sensibilité au pH, qui aurait pu être due à l'introduction d'un groupe amino, n'a été observée.

Différents essais ont été effectués en vue de tester le procédé selon l'invention.

Une première série de tests a été réalisée pour définir les rôles que jouent le choix de l'organotrialkoxysilane, la quantité utilisée et la température de traitement thermique.

La solution de base était formée de 100 mg de PVC, 200 mg de dioctyle sébacate (DOS) et 3 mg d'organotrialkoxysilane dissous dans 3 ml de cyclohexanone. Plusieurs types d'organotrialkoxysilanes ont été testés, soit le 3-aminopropyle triéthoxysilane, le 3(2-aminoéthyle amino) propyle triméthoxysilane, le triméthoxysilyle propyle diéthylène triamine, ainsi qu'un mélange de 3(2-aminoéthyle amino) propyle triméthoxysilane et de phényle triéthoxysilane, dans une proportion pondérale de 1:1.

Les solutions ainsi obtenues ont été étendues sur des plaques de verre pour microscopes afin de former une couche dont l'épaisseur, comprise entre 50 et 100 µm, était suffisante pour tester dans de bonnes conditions les caractéristiques d'adhérence. L'ensemble a été séché à température ambiante durant une nuit et dans une atmosphère normalement humide, puis chauffé dans un four comme indiqué. Les plaques de verre ont ensuite été placées dans de l'eau durant au moins deux jours.

Les caractéristiques relatives à l'adhérence ont été évaluées comme suit:
- **- :**: facile à enlever,
- **+/- :**: légère amélioration,
- **+ :**: sensible amélioration,
- **++ :**: difficile à arracher, mais la couche vient d'une pièce lorsqu'elle se décolle,
- **+++ :**: difficile à arracher, la couche se déchire,
- **++++ :**: impossible à arracher.

Les résultats des tests sont résumés dans le tableau ci-dessous.

| Type d'aminosilane | Quantité [%pondéral] | 70°C, 3h | 120°C, 2h | 170 °C, 5 min |
|---|---|---|---|---|
| Sans aminosilane | | **-** | **-/+** | **-/+** |
| 3-aminopropyle triéthoxysilane | 0.17 | **-/+** | **++** | **+** |
| | 0.33 | **-/+** | **+++** | **++** |
| | 0.66 | **-/+** | **++++** | **++** |
| | 1.33 | **-/+** | **++++** | **+++** |
| 3(2-aminoéthyle amino) propyle triméthoxysilane | 0.17 | **+** | **++** | **+** |
| | 0.33 | **++** | **++++** | **++** |
| | 0.66 | **++** | **++++** | **++** |
| | 1.33 | **++** | **++++** | **+++** |
| Triméthoxysilyle propyle diéthylène triamine | 0.17 | **+** | **++** | **+** |
| | 0.33 | **+** | **+++** | **++** |
| | 0.66 | **+** | **++++** | **++** |
| | 1.33 | **+** | **++++** | **+++** |
| Mélange de silanes | 0.09 | **-/+** | **++** | **+** |
| | 0.17 | **-/+** | **+++** | **+** |
| | 0.33 | **+** | **++++** | **++** |
| | 0.66 | **+** | **++++** | **++** |
| | 1.33 | **++** | **++++** | **+++** |

Il est évident que, plus la température du traitement thermique est élevée, plus sa durée doit être courte. Il a ainsi été constaté une dégradation du copolymère lorsque le traitement dépassait cinq minutes à 170°C, et tout particulièrement avec une forte concentration d'organotrialkoxysilane.

A une température de 120°C et pour la concentration d'organotrialkoxysilane la plus forte, la couche prenait une teinte jaune-brun.

On constate, à l'examen du tableau, que l'adjonction d'un organotrialkoxysilane augmente de manière considérable l'adhérence du PVC sur le verre, et tout particulièrement avec une concentration comprise entre 0.5 et 1% et un traitement thermique de deux heures à 120 °C.

Il est intéressant de relever que des essais ont été effectués avec un traitement de 3 heures à 80°C. L'adhérence obtenue avant immersion dans l'eau était également excellente, mais il se formait des vésicules d'eau à l'interface du PVC et du verre, dont le nombre augmentait sensiblement au cours de l'immersion.

Un autre test a été réalisé en utilisant la solution de base de l'exemple ci-dessus, avec 1% pondéral de 3(2-aminoéthyle amino) propyle triméthoxysilane (par rapport au poids total de PVC et de plastifiant). Un ISFET a été revêtu d'une fine couche (5 à 10 µm) de ce mélange, puis placé dans un four à 120°C durant 2 heures. La couche ainsi obtenue a été recouverte d'une couche sélective d'ions d'environ 50 µm, réalisée à partir d'un mélange formé de 100 mg de PVC, 200 mg de dioctyle sébacate (DOS) et 3 mg d'un agent ionophore, le tout dissout dans 3 ml de cyclohexanone.

Différents types d'agents ionophores ont été employés, soit le valinomycine mélangé avec 0.7 mg de potassium tetrakis(4-chlorophényle) borate, le nonactine et le tétradodécyle ammonium nitrate. Après évaporation du solvant à l'air libre durant une nuit, les dispositifs ainsi obtenus ont été placés dans un électrolyte durant plusieurs heures. Après quoi, les propriétés relatives à la mesure sélective des ions ont été testées. La qualité des mesures était conforme aux attentes.

L'adhérence des couches a ensuite été contrôlée après quelques jours d'immersion dans l'électrolyte. Toutes les parties recouvertes d'une couche de copolymère ont montré une excellente adhérence.

Un troisième test a été effectué en réalisant une couche sélective d'ions autoadhérente. Elle a été préparée en mélangeant 100 mg de PVC, 200 mg de dioctyle sébacate (DOS), 0.5 mg de 3-aminopropyle triéthoxysilane et 3 mg d'un agent ionophore dans 1 ml de tétrahydrofurane. Les mêmes agents ionophores que ceux mentionnés ci-dessus ont été utilisés.

La solution ainsi obtenue a été étendue à la surface de la grille de plusieurs ISFET préalablement montés sur des circuits imprimés et encapsulés au moyen d'époxy. Après évaporation du solvant (une nuit à l'air ambiant), les ISFET ont été placés dans un four à 170°C durant 5 minutes, puis immergés, durant deux jours au moins, dans un électrolyte approprié. Là aussi, on a observé une très bonne adhérence, et des résultats de mesure tout à fait conformes aux attentes.

Ainsi, et de manière surprenante, les électrodes exposées à des températures pouvant atteindre 170°C, malgré le risque de décomposition des composants électroactifs, ont donné des résultats en tout point comparables à des électrodes obtenues de manière connue avec, de plus, une excellente adhérence. En outre, aucune influence sur le pH n'a pu être mise en évidence dans les régions testées, soit pH 4-9 pour des ions K⁺ et NO₃ et pH 4-7 pour des électrodes sensibles aux ions NH₄⁻.

## Revendications

1. Procédé de dépôt d'une couche adhérente d'un copolymère de PVC sur une électrode pour la mesure sélective d'ions, du type comportant un substrat, un organe destiné à mesurer l'activité d'un ion dans une solution et une membrane recouvrant ledit organe et formée d'un matériau à base de PVC comportant un agent ionophore choisi en fonction de l'ion à mesurer, **caractérisé en ce qu'**il comporte les étapes de:
• formation, dans un solvant organique, d'un mélange de précurseurs du copolymère comportant du PVC et 0.1 à 2 % en poids d'un organotrialkoxysilane répondant à la formule:
H(HN - R₁)ₓHN - R₂- Si (OR₃)₃,
dans laquelle:
- R₁ est un groupe alkyle ou aromatique intercalaire,
- R₂ est un groupe alkyle ou aromatique intercalaire,
- R₃ est un groupe alkyte, les trois substituants R₃ pouvant ne pas être les mêmes, et
- x est compris entre 0 et 2,
• dépôt d'une couche de ce mélange sur ledit substrat,
• séchage du mélange pour faire évaporer le solvant, et
• chauffage de l'ensemble ainsi obtenu à une température comprise entre 70 et 170 °C, durant un temps compris respectivement entre 3 heures et 5 minutes.

2. Procédé selon la revendication 1, **caractérisé en ce que** ledit organotrialkoxysilane est choisi parmi le 3-aminopropyle triéthoxysilane, le 3(2-aminoéthyle amino) propyle triméthoxysilane, le triméthoxysilyle propyle diéthylène triamine ou leur mélange.

3. Procédé selon la revendication 1, **caractérisé en ce que** ledit organotrialkoxysilane est formé d'un mélange de 3(2-aminoéthyle amino) propyle triméthoxysilane et de phényle triéthoxysilane.

4. Procédé selon l'une des revendications 1 à 3, **caractérisé en ce que** ladite température est voisine de 120°C et est appliquée durant deux heures environ.

5. Procédé selon l'une des revendications 1 à 4, **caractérisé en ce que** ledit mélange comporte, en outre, un plastifiant dans une proportion en poids pouvant aller jusqu'à deux parts de plastifiant pour une part de PVC.

6. Procédé selon la revendication 5, **caractérisé en ce que** ladite proportion est d'une part du poids de PVC pour une à deux parts de plastifiant.

7. Procédé selon l'une des revendications 5 et 6, **caractérisé en ce que** ledit plastifiant est choisi parmi le dibutyle phtalate, le bis(2-éthyle hexyle) phtalate, le dibutyle sébacate, le bis(2-éthyle hexyle) sébacate, le tris(2-éthyle hexyle) trimellitate, tris(2-éthyle hexyle) phosphate, le dioctyle phényle phosphonate, le 2-nitrophényle octyle éther, le bis(1-butyle pentyle) décane-1, le 10-diyle diglutarate, le tétraundécyle benzophénone-3,3',4,4'-tétracarboxylate et leurs dérivés.

8. Procédé selon l'une des revendications 1 à 7, **caractérisé en ce que** ledit solvant est choisi parmi le méthyle cyclohexanone, le diméthyle formamide, le nitrobenzène, l'isophorone, le mésityle oxyde, le tétrahydrofurane et le cyclohexanone, et **en ce que** le PVC est de type à haut poids moléculaire.

9. Procédé selon l'une des revendications 1 à 7, **caractérisé en ce que** ledit solvant est choisi parmi le dipropyle cétone, le méthyle amyle cétone, le méthyle isobutyle cétone, l'acétonyle acétone, le méthyle éthyle cétone, le dioxane, le chlorure de méthylène et leurs mélanges, et **en ce que** le PVC est de type à faible poids moléculaire.

10. Procédé selon l'une des revendications 8 et 9, **caractérisé en ce que** ledit mélange comporte une part du poids des précurseurs dudit copolymère pour une à trente parts de solvant.

11. Procédé selon la revendication 10, **caractérisé en ce que** ledit mélange comporte une part du poids des précurseurs dudit copolymère pour dix à vingt parts de solvant.

12. Electrode pour la mesure sélective d'ions, comportant un substrat, un organe destiné à mesurer l'activité d'un ion dans une solution et une membrane recouvrant ledit organe et formée d'un matériau à base de PVC comportant un agent ionophore choisi en fonction de l'ion à mesurer, **caractérisée en ce qu'**elle comporte, en outre, une couche d'un copolymère de PVC et d'organotrialkoxysilane interposée entre le substrat et la membrane afin d'assurer l'adhérence de cette dernière et réalisée par le procédé selon l'une des revendications 1 à 11

13. Electrode pour la mesure sélective d'ions, comportant un substrat, un organe destiné à mesurer l'activité d'un ion dans une solution et une membrane formée d'un matériau à base de PVC comportant un agent ionophore choisi en fonction de l'ion à mesurer, **caractérisée en ce que** ledit matériau est un copolymère de PVC et d'organotrialkoxysilane réalisé par le procédé selon l'une des revendications 1 à 11.

14. Electrode selon l'une des revendications 12 et 13, **caractérisée en ce que** ledit organe est formé d'un ISFET.

15. Electrode selon l'une des revendications 12 et 13, **caractérisée en ce que** ledit organe est formé d'une couche métallique.

## Patentansprüche

1. Verfahren zur Aufbringung einer Haftschicht eines PVC-Copolymers auf eine Elektrode zur selektiven Ionenmessung, umfassend ein Substrat, ein Element, das dazu bestimmt ist, die Aktivität eines Ions in einer Lösung zu messen, und eine Membran, die das Element bedeckt und aus einem Material auf PVC-Basis gebildet ist, umfassend ein ionophores Mittel, das in Abhängigkeit von dem zu messenden Ion ausgewählt wird, **dadurch gekennzeichnet, dass** es die folgenden Schritte umfasst:
• Bildung einer Mischung von Zwischenstoffen des Copolymers in einem organischen Lösungsmittel, umfassend PVC und 0,1 bis 2 Gew.% eines Organotrialkoxysilans entsprechend der Formel:
H(HN - R₁)ₓHN - R₂ - Si-(OR₃)₃,
wobei :
- R₁ eine Alkylzwischengruppe oder aromatische Zwischengruppe ist,
- R₂ eine Alkylzwischengruppe oder aromatische Zwischengruppe ist,
- R₃ eine Alkylgruppe ist, wobei die drei Substituenten R₃ nicht dieselben sein müssen, und
- X zwischen 0 und 2 liegt,
• Aufbringen einer Schicht dieser Mischung auf das Substrat,
• Trocknen der Mischung, um das Lösungsmittel zu verdampfen, und
• Erhitzung der auf diese Weise gewonnenen Gesamtheit auf eine Temperatur zwischen 70 und 170 °C während einer Zeit zwischen 3 Stunden bzw. 5 Minuten.

2. Verfahren nach Anspruch 1, **dadurch gekennzeichnet, dass** das Organotrialkoxysilan unter dem 3-Aminopropyltriethoxysilan, dem 3(2-Aminoethylamino)propyltrimethoxysilan, dem Trimethoxysilylpropyldiethylentriamin oder ihrer Mischung ausgewählt wird.

3. Verfahren nach Anspruch 1, **dadurch gekennzeichnet, dass** das Organotrialkoxysilan aus einer Mischung von 3(2-Aminoethylamino)propyltrimethoxysilan und Phenyltriethoxysilan gebildet ist.

4. Verfahren nach einem der Ansprüche 1 bis 3, **dadurch gekennzeichnet, dass** die Temperatur nahe 120 °C ist und ungefähr zwei Stunden lang angelegt wird.

5. Verfahren nach einem der Ansprüche 1 bis 4, **dadurch gekennzeichnet, dass** die Mischung ferner ein Plastifizierungsmittel in einem Gewichtsverhältnis umfasst, das bis zu zwei Teile Plastifizierungsmittel für einen Teil PVC enthalten kann.

6. Verfahren nach Anspruch 5, **dadurch gekennzeichnet dass** dieses Verhältnis einen Teil des PVC-Gewichts für einen oder zwei Teile Plastifizierungsmittel beträgt.

7. Verfahren nach einem der Ansprüche 5 und 6, **dadurch gekennzeichnet, dass** das Plastifizierungsmittel unter Dibutylphthalat, Bis(2-ethylhexyl)phthalat, Dibutylsebacat, Bis(2-ethylhexyl)sebacat, Tris(2-ethylhexyl)trimellitat, tris(2-ethylhexyl)phosphat, Dioctylphenylphosphonat, 2-Nitrophenyloctylether, Bis(1-butylpentyl)decan-1, 10-Diyldiglutarat, Tetraundecylbenzophenon-3,3',4,4'-tetracarboxylat und ihren Derivaten ausgewählt wird.

8. Verfahren nach einem der Ansprüche 1 bis 7, **dadurch gekennzeichnet, dass** das Lösungsmittel unter Methylcyclohexanon, Dimethylformamid, Nitrobenzol, Isophoron, Mesityloxid, Tetrahydrofuran und Cyclohexanon ausgewählt wird, und dass das PVC vom Typ mit hohem Molekulargewicht ist.

9. Verfahren nach einem der Ansprüche 1 bis 7, **dadurch gekennzeichnet, dass** das Lösungsmittel unter Dipropylketon, Methylamylketon, Methylisobutylketon, Acetonylaceton, Methylethylketon, Dioxan, Methylenchlorid und ihren Mischungen ausgewählt wird, und dass das PVC vom Typ mit geringem Molekulargewicht ist.

10. Verfahren nach einem der Ansprüche 8 und 9, **dadurch gekennzeichnet, dass** die Mischung einen Teil des Gewichts der Zwischenstoffe des Copolymers für einen bis dreißig Teile des Lösungsmittel umfasst.

11. Verfahren nach Anspruch 10, **dadurch gekennzeichnet, dass** die Mischung einen Teil des Gewichts der Zwischenstoffe des Copolymers für zehn bis zwanzig Teile Lösungsmittel umfasst.

12. Elektrode zur selektiven Ionenmessung, umfassend ein Substrat, ein Element, das dazu bestimmt ist, die Aktivität eines Ions in einer Lösung zu messen, und eine Membran, die das Element bedeckt und aus einem Material auf PVC-Basis gebildet ist, umfassend ein ionophores Mittel, das in Abhängigkeit von dem zu messenden Ion ausgewählt wird, **dadurch gekennzeichnet, dass** sie ferner eine Schicht eines Copolymers aus PVC und Organotrialkoxysilan umfasst, die zwischen dem Substrat und der Membran angeordnet ist, um die Haftung dieser letztgenannten zu gewährleisten, und die durch das Verfahren nach einem der Ansprüche 1 bis 11 hergestellt ist.

13. Elektrode zur selektiven Ionenmessung, umfassend ein Element, das dazu bestimmt ist, die Aktivität eines Ions in einer Lösung zu messen, und eine Membran, die aus einem Material auf PVC-Basis gebildet ist, umfassend ein ionophores Mittel, das in Abhängigkeit von dem zu messenden Ion ausgewählt wird, **dadurch gekennzeichnet, dass** das Material ein Copolymer aus PVC und Organotrialkoxysilan ist, das durch das Verfahren nach einem der Ansprüche 1 bis 11 hergestellt ist.

14. Elektrode nach einem der Ansprüche 12 und 13, **dadurch gekennzeichnet, dass** das Element aus ISFET hergestellt ist.

15. Elektrode nach einem der Ansprüche 12 und 13, **dadurch gekennzeichnet, dass** das Element aus einer metallischen Schicht gebildet ist.

## Claims

1. Method for depositing an adhesive PVC copolymer layer on an electrode for ion selective measurement, of a type incorporating a substrate, an instrument designed to measure the activity of an ion in a solution, and a membrane covering said instrument and formed of a PVC-base material incorporating an ionophoretic agent selected as a function of the ion to be measured, **characterized in that** it comprises the steps of:
• Formation, in an organic solvent, of a mixture of precursors of the copolymer incorporating PVC and 0.1 % to 2% by weight of an organotrialkoxysilane corresponding to the formula:
H(HN - R₁)ₓHN - R₂ - Si - (OR₃)₃,
where:
- R₁ is an intermediate alkyl or aromatic group;
- R₂ is an intermediate alkyl or aromatic group;
- R₃ is an alkyl group, with the three R₃ substituents possibly being not the same, and
- x is in the range between 0 and 2.
• Deposition of a layer of this mixture on said substrate.
• Drying of the mixture to evaporate the solvent, and
• Heating of the aggregate thus obtained to a temperature in the 70°C to 170°C range, for a time ranging between 3 hours and 5 minutes respectively.

2. Method according to claim 1, **characterized in that** said organotrialkoxysilane is selected from 3-amino propyl triethoxysilane, 3(2-aminoethyl amino) propyl trimethoxysilane, trimethoxysilyl propyl diethylene triamine or their mixture.

3. Method according to claim 1, **characterized in that** said organotrialkoxysilane is formed of a mixture of 3(2-aminoethyl amino) propyl trimethoxysilane and phenyl triethoxysilane.

4. Method according to one of the claims 1 to 3, **characterized in that** said temperature is close to 120°C and is applied for approximately two hours.

5. Method according to one of the claims 1 to 4, **characterized in that** said mixture includes, in addition, a plasticizer, in a proportion by weight of up to two parts plasticizer for one part PVC.

6. Method according to claim 5, **characterized in that** said proportion is one part by weight of PVC for one to two parts plasticizer.

7. Method according to one of the claims 5 and 6, **characterized in that** said plasticizer is selected from dibutyl phthalate, bis(2-ethylhexyl) phthalate, dibutyl sebacate, bis(2-ethylhexyl) sebacate, tris(2-ethylhexyl) trimellitate, tris(2-ethylhexyl) phosphate, dioctyl phenyl phosphonate, 2-nitrophenyl octyl ether, bis(1-butyl pentyl) decane-1, 10-diyl diglutarate, tetraundecyl benzophenone-3,3',4,4'-tetracarboxylate and their derivatives.

8. Method according to one of the claims 1 to 7, **characterized in that** said solvent is selected from methyl cyclohexanone, dimethyl formamide, nitrobenzene, isophorone, mesityl oxide, tetrahydrofurane and cyclohexanone, and **in that** the PVC is of a high molecular weight type.

9. Method according to one of the claims 1 to 7, **characterized in that** said solvent is selected from dipropyl ketone, methylamylketone, methyl isobutyl ketone, acetonylacetone, methyl ethyl ketone, dioxane, methylene chloride and their mixtures, and **in that** the PVC is of a low molecular weight type.

10. Method according to one of the claims 8 and 9, **characterized in that** said mixture contains one part by weight of precursors of said copolymer for one to thirty parts of solvent.

11. Method according to claim 10, **characterized in that** said mixture contains one part by weight of precursors of said copolymer for ten to twenty parts of solvent.

12. Electrode for ion selective measurement, incorporating a substrate, an instrument designed to measure the activity of an ion in a solution, and a membrane covering said instrument and formed of a PVC-base material incorporating an ionophoretic agent selected as a function of the ion to be measured, **characterized in that** it includes, moreover, a layer of a PVC and organotrialkoxysilane copolymer inserted between the substrate and the membrane to ensure the latters adhesion, and produced by the method according to one of the claims 1 to 11.

13. Electrode for ion selective measurement, incorporating a substrate, an instrument designed to measure the activity of an ion in a solution and a membrane formed of a PVC-base material incorporating an ionophoretic agent selected as a function of the ion to be measured, **characterized in that** said material is a PVC and organotrialkoxysilane copolymer produced by the method according to one of the claims 1 to 11.

14. Electrode according to one of the claims 12 and 13, **characterized in that** said instrument is formed of an ISFET.

15. Electrode according to one of the claims 12 and 13, **characterized in that** said instrument is formed of a metallic layer.
